# EUROPÄISCHE PATENTSCHRIFT

(11) **EP 1 265 019 B1**
(45) Veröffentlichungstag und Bekanntmachung des Hinweises auf die Patenterteilung: **24.08.2005**
(21) Anmeldenummer: 02010902.1
(22) Anmeldetag: 16.05.2002
(51) Int. Cl.: F16L 13/14

(54) **Stützrohr und Verbindungsanordnung**
Supporting tube and connector assembly
Tube de support et assemblage de connection

(30) Priorität: 07.06.2001 DE 20109548 U
(43) Veröffentlichungstag der Anmeldung: 11.12.2002
(73) Patentinhaber: VIEGA GmbH & Co. KG., 57439 Attendorn (DE)
(72) Erfinder: Viegener, Walter, 57439 Attendorn (DE)
(74) Vertreter: Dantz, Jan Henning

(56) Entgegenhaltungen:
- DE-B- 1 243 477
- DE-C- 4 444 119

## Beschreibung

Die vorliegende Erfindung betrifft ein Stützrohr für eine Pressverbindung und eine Pressverbindung mit einem Rohr und einem Stützrohr, mit einem im Querschnitt im wesentlichen zylindrischen Stutzen, der in ein Rohr einfügbar ist, und einen sich daran anschließenden aus dem Rohr herausragenden Abschnitt, wobei an dem Stutzen senkrecht zu dessen Achse Rillen ausgebildet sind, die sich beim Verpressen in das Material des Rohres eingraben. Solche Stützrohre werden meist in durch Verpressung hergestellten Verbindungsanordnungen eingesetzt.

Es gibt Stützrohre, die zur Herstellung einer Pressverbindung in Rohre, beispielsweise Kunststoff- oder Verbundrohre eingeschoben werden, wobei dann durch Verpressen des Rohres im Bereich des Stützrohres eine verpresste Einheit gebildet wird. Meist ist um das Rohr eine Presshülse aus Metall angeordnet, so dass durch Verpressen auf der Presshülse das Rohr auf den Stutzen unter Verformung des Materials gedrückt wird und so eine abgedichtete Verbindung hergestellt wird. An dem Stützrohr kann ein weiteres Bauteil, wie eine Armatur oder ein Fitting angeschlossen sein. Bei solchen bekannten Verbindungsanordnungen und Stützrohren besteht der Nachteil, dass nach dem Einschieben des Stützrohres eine vorläufige Abdichtung zwischen Rohr und Stützrohr vorhanden sein kann, so dass bei einem versehentlichen Vergessen des Verpressens zunächst keine Leckage auftritt. Da diese vorläufige Abdichtung meist nicht lange anhält, tritt ein Schaden durch einen Fluidaustritt erst später ein und ist daher viel schwieriger auszumachen und zu beheben.

Aus der DE 44 44 119 C1 ist eine Übergangsrohrverbindung bekannt, bei der ein metallisches Rohrstück in ein Kunststoffrohr einfügbar ist. An dem metallischen Rohrstück ist ein Stutzen ausgebildet, der an einem ersten Abschnitt Rippen aufweist, auf denen das Kunststoffrohr durch Verpressen festlegbar ist, und an einem zweiten Abschnitt mit verbundenem Durchmesser Dichtungsringe besitzt, die für eine Abdichtung zwischen Rohrstück und Kunststoffrohr sorgen. Der Verbindungsbereich ist somit von dem Dichtbereich an dem Rohrstück getrennt angeordnet.

Aus der US 4 844 516 ist eine Verbindungsanordnung bekannt, bei der ein Stützrohr in ein Rohr einfügbar ist. An dem Stützrohr sind an dem vorderen Abschnitt Rippen zur Verbindung mit dem umgebenen Rohr vorgesehen, während an einem mittleren Abschnitt Dichtungsringe angeordnet sind, sodass bei einem Aufschieben des Rohres in diesem Bereich eine Abdichtung erreicht wird.

Es ist daher Aufgabe der vorliegenden Erfindung, ein Stützrohr für eine Pressverbindung der eingangs genannten Art zu schaffen, bei dem ein Vergessen des Verpressens sofort sichtbar wird, da keine Abdichtung zwischen Stützrohr und Rohr im unverpressten Zustand gegeben ist. Ferner soll die Pressverbindung einfach herstellbar sein.

Diese Aufgabe wird mit einem Stützrohr mit den Merkmalen des Anspruches 1 gelöst.

Wenn an den Rillen des Stützrohres mindestens eine Ausnehmung vorgesehen ist, so dass im Bereich der Ausnehmung im unverpressten Zustand ein Strömungskanal zwischen Stutzen und Rohr ausgebildet ist, tritt beim versehentlichen Vergessen des Verpressens ein Fluid aus, so dass die Leckage umgehend festgestellt werden kann. Durch die Ausnehmung ist ein Strömungskanal gebildet, der zumindest einen geringen Volumenstrom durchlässt, der von außen gut sichtbar ist. Dabei können zur Herstellung der Pressverbindung Standardrohre und handelsübliche Presshülsen verwendet werden, da lediglich das Stützrohr baulich verändert ist, um eine gewollte Leckage im unverpressten Zustand bereitzustellen.

Gemäß einer bevorzugten Ausführungsform der Erfindung ist die Ausnehmung durch eine an den Rippen vorgesehene Abflachung gebildet. Eine solche Abflachung lässt sich beim Verpressen besonders einfach abdichten, da keine scharfen Kanten zwischen Abflachung und dem zylindrischen Querschnitt des Stutzens vorgesehen sind. Vorzugsweise sind dabei über dem Umfang des Stutzens verteilt mehrere Abflachungen vorgesehen.

Gemäß einer weiteren Ausführungsform ist die Ausnehmung durch mindestens einen Einschnitt an den Rillen gebildet, der als Strömungskanal eingesetzt wird. Über den Umfang des Stutzens verteilt können auch mehrere solche Einschnitte vorgesehen sein, die eine Rändelung nach DIN 82-RAA bilden. Die Ausnehmung kann auch durch andere Formen oder beispielsweise eine rauhe Oberfläche gebildet sein, um zumindest einen minimalen Strömungsquerschnitt auszubilden.

Für eine dauerhaft dichte Verbindung kann zusätzlich an dem Stutzen eine ringförmige Vertiefung vorgesehen sein, in der ein Dichtring als ergänzendes Mittel zur Abdichtung eingelegt ist. Um den Strömungskanal im Bereich des Dichtringes zu bilden, kann im Bereich der Vertiefung eine Ausnehmung vorgesehen sein, so dass zwischen Dichtring und Stutzen ein verpressbarer Strömungskanal ausgebildet ist. Über den Stutzen verteilt können dabei mehrere Vertiefungen und Dichtringe vorgesehen werden.

Ferner wird eine erfindungsgemäße Verbindungsanordnung bereitgestellt, die aus einer Einheit aus Stützrohr und verpressbarem Rohr zusammengesetzt ist.

Die Erfindung wird nachfolgend anhand von vier Ausführungsbeispielen in Bezug auf die beigefügten Zeichnungen näher erläutert. Es zeigen:
- Fig. 1A: eine teilweise geschnittene perspektivische Ansicht eines Ausführungsbeispieles eines erfindungsgemäßen Stützrohres im montierten Zustand;
- Fig. 1B: eine Querschnittsansicht auf die in Fig. 1A gezeigte Verbindungsanordnung;
- Fig. 1C: eine Schnittansicht entlang der Linie A-A der Fig. 1B;
- Fig. 1D: eine perspektivische Ansicht des Stützrohres der Fig. 1A;
- Fig. 2A bis 2D: mehrere Ansichten eines zweiten erfindungsgemäßen Ausführungsbeispieles entsprechend den Ansichten der Fig. 1A bis 1D;
- Fig. 3A bis 3D: mehrere Ansichten eines dritten Ausführungsbeispieles entsprechend den Ansichten der Fig. 1A bis 1D, und
- Fig. 4A bis 4D: mehrere Ansichten eines vierten Ausführungsbeispieles entsprechend den Ansichten der Fig. 1A bis 1D.

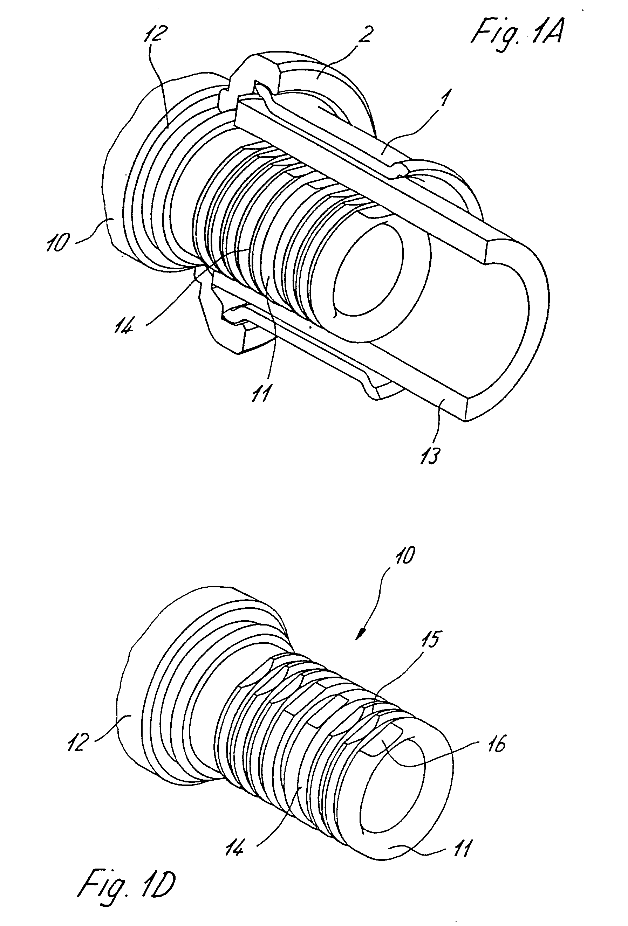

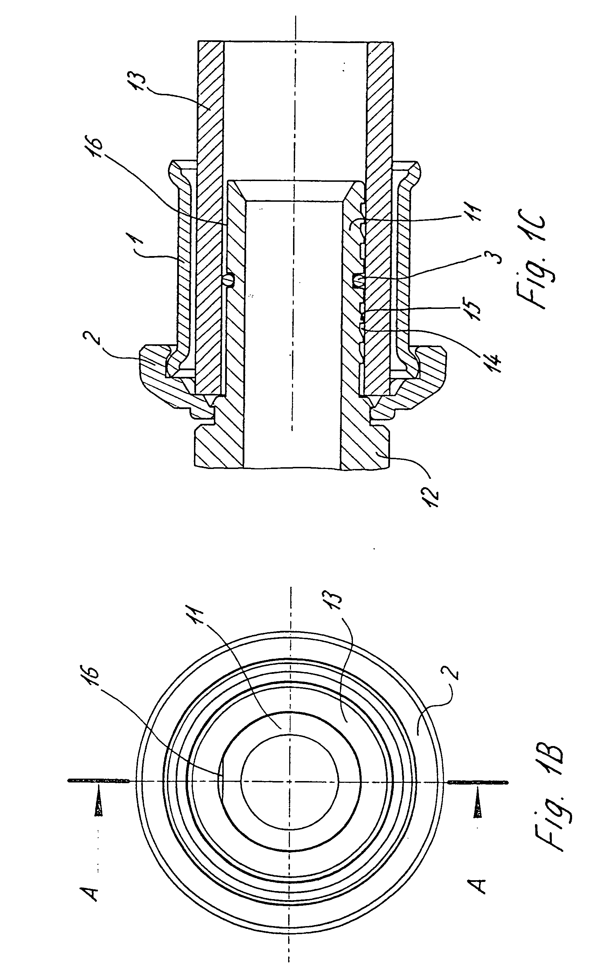

Das in den Fig. 1A bis 1D gezeigte Ausführungsbeispiel umfasst ein Stützrohr 10 aus Metall oder Kunststoff mit einem Stutzen 11, der in ein Rohr 13 zur Herstellung einer Pressverbindung einfügbar ist. Benachbart zu dem Stutzen 11 ist integral ein Abschnitt 12 mit vergrößertem Außendurchmesser angeformt, der aus dem Rohr 13 ragt. An dem Abschnitt 12 sind dabei Schultern ausgebildet, gegen die eine Stirnkante des Rohres 13 nach Art eines Anschlags anliegt. An dem Stutzen 11 sind Rillen 14 ausgebildet, zwischen denen etwas hervorstehende Rippen 15 vorgesehen sind. Eine dieser Rillen 14 kann dabei vertieft ausgebildet sein, um einen Dichtring 3 daran aufzunehmen.

An einem oberen Abschnitt ist eine Abflachung 16 vorgesehen, die sich durchgehend über die Rippen 14 erstreckt. Dadurch ist zwischen dem Stutzen 11 und dem Rohr 13 ein Strömungskanal im Bereich der Abflachung 16 ausgebildet. Vor dem Verpressen besteht daher eine Undichtigkeit zwischen Stützrohr 10 und Rohr 13, so dass bei einem Vergessen des Verpressens Fluid an der Verbindung austreten würde. Erst durch das Verpressen des Rohres 13 auf den Stutzen 11 wird die gewünschte Abdichtung erreicht.

Zur Herstellung einer Pressverbindung ist eine Presshülse 1 aus Metall um das Rohr 13 angeordnet, die ein nachträgliches Aufweiten des Rohres 13 verhindert. Zwischen dem herausragenden Abschnitt 12 des Stützrohres 10 und der Presshülse 1 ist ein Ring 2 für eine axiale Festlegung der Presshülse 1 vorgesehen.

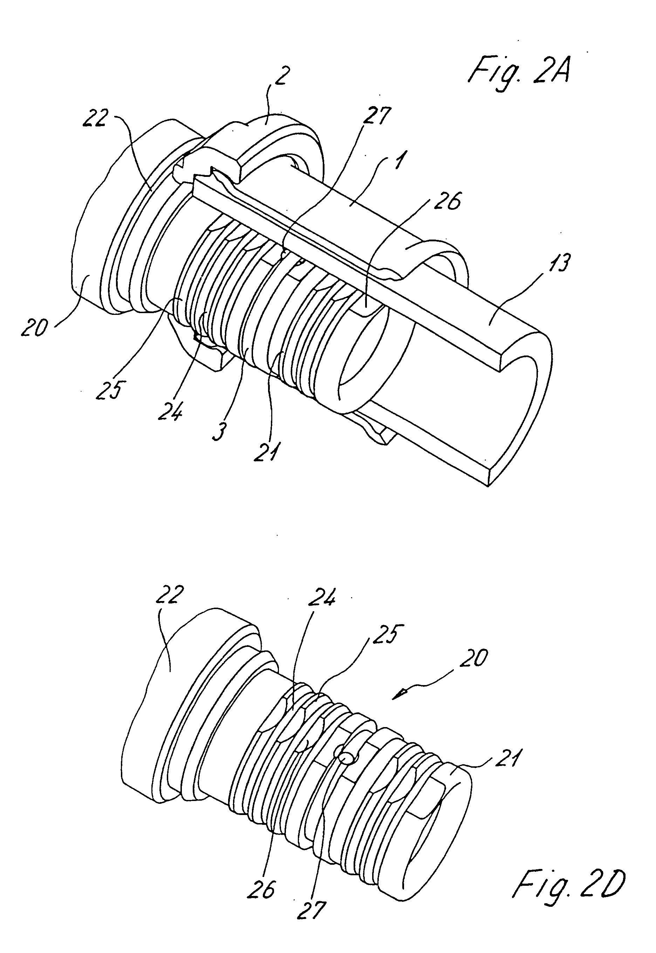

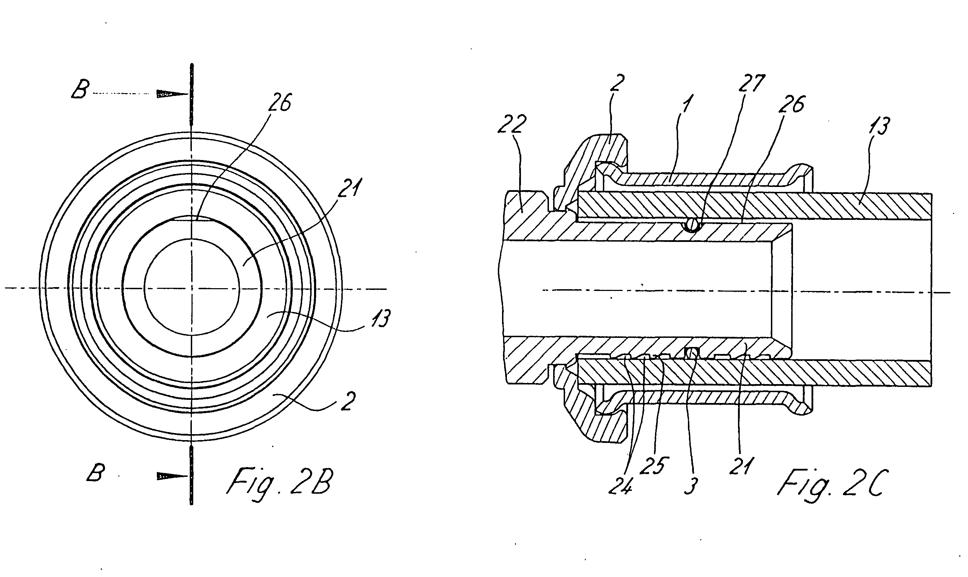

In den Fig. 2A bis 2D ist eine zweite Ausführungsform eines Stützrohrs 20 mit einem in ein Rohr 13 einfügbaren Stutzen 21 und einem aus dem Rohr 13 herausragenden Abschnitt 22 gezeigt. Bei diesem Stützrohr 20 sind am Umfang des Stutzens 21 Rillen 24 und Rippen 25 senkrecht zur Achse des Stutzens ausgebildet. Um vor dem Verpressen eine undichte Verbindung zu besitzen, ist eine Abflachung 26 über die Rippen 25 ausgebildet, so dass ein Strömungskanal zwischen Rohr 13 und der Abflachung 26 vorgesehen ist. Ferner ist am Umfang des Stutzens 21 ein Dichtring 3 angeordnet, der im eingebauten Zustand schon an dem Rohr 13 anliegt. Um den Strömungskanal nicht zu unterbrechen, ist im Bereich der Vertiefung für den Dichtungsring 3 eine Ausnehmung 27 vorgesehen, die den Dichtring 3 umgibt. Die Ausnehmung 27 bildet dabei den Strömungskanal, der die beiden gegenüberliegenden Seiten des Stutzens 21 von dem Dichtring 3 aus verbindet. Auch diese Ausführungsform ist daher im noch nicht verpressten Zustand undicht und kann aber durch Pressen auf die Presshülse 1 abgedichtet werden, wobei das Rohr 13 gegen die Abflachung 26 gedrückt wird und der Dichtring 3 die Ausnehmung 27 verschließt.

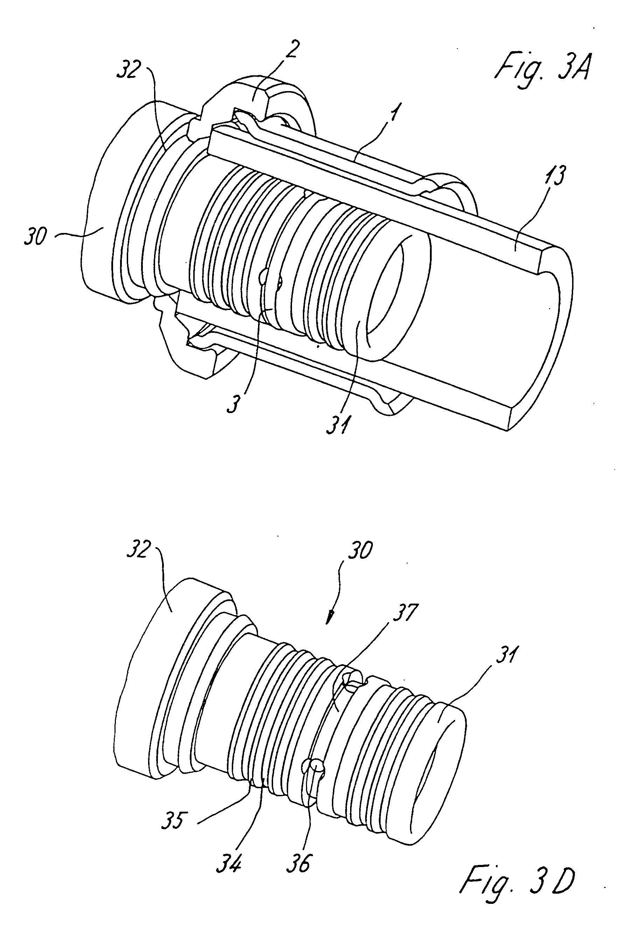

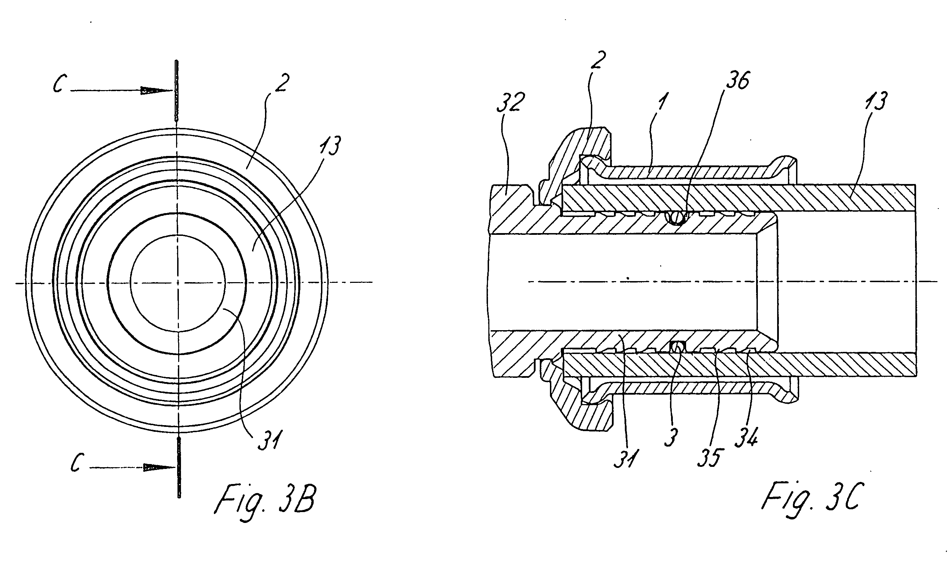

Bei dem in den Fig. 3A bis 3D gezeigten Ausführungsbeispiel ist ein Stützrohr 30 gezeigt, an dessen Stutzen 31 wie bei den vorangegangenen Ausführungsbeispielen Rillen 34 und Rippen 35 ausgebildet sind. In der Mitte des Stutzens 31 ist eine ringförmige Vertiefung 37 zur Aufnahme eines Dichtringes 3 vorgesehen. In der ringförmigen Vertiefung 37 sind ein oder mehrere Ausnehmungen 36 vorgesehen, die einen eingelegten Dichtring 3 umgeben und somit einen Strömungskanal um den Dichtring 3 bilden. Im unverpressten Zustand besteht keine vollständige Abdichtung zwischen den Rippen 35 und dem Rohr 13, wobei dies einerseits durch eine entsprechende Bemaßung der Rippen 35 erreicht werden kann oder andererseits die Rippen 35 mit einer rauhen Oberfläche überzogen sind, so dass mehrere kleine Ausnehmungen gebildet sind, die ein Durchströmen eines Fluides ermöglichen.

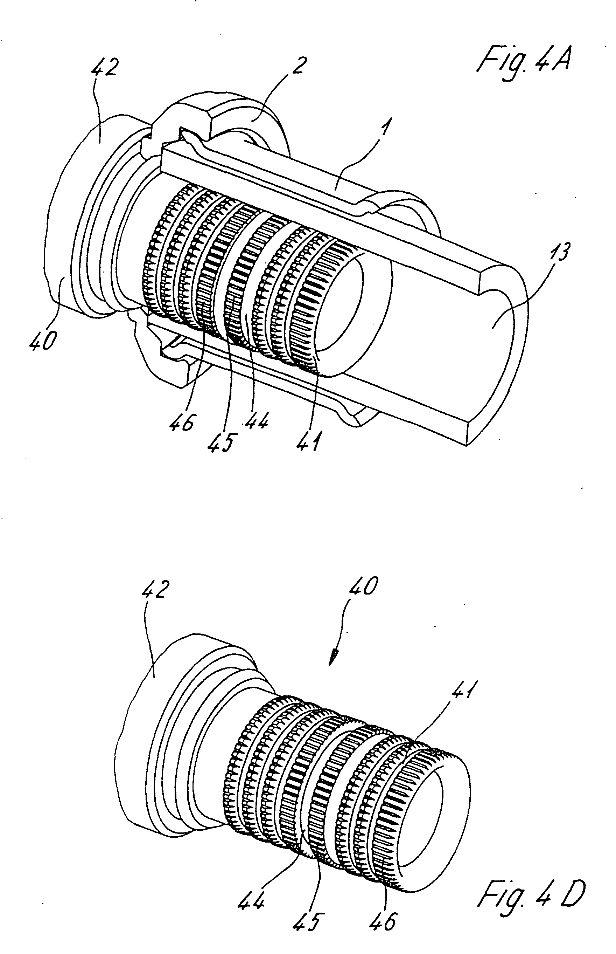

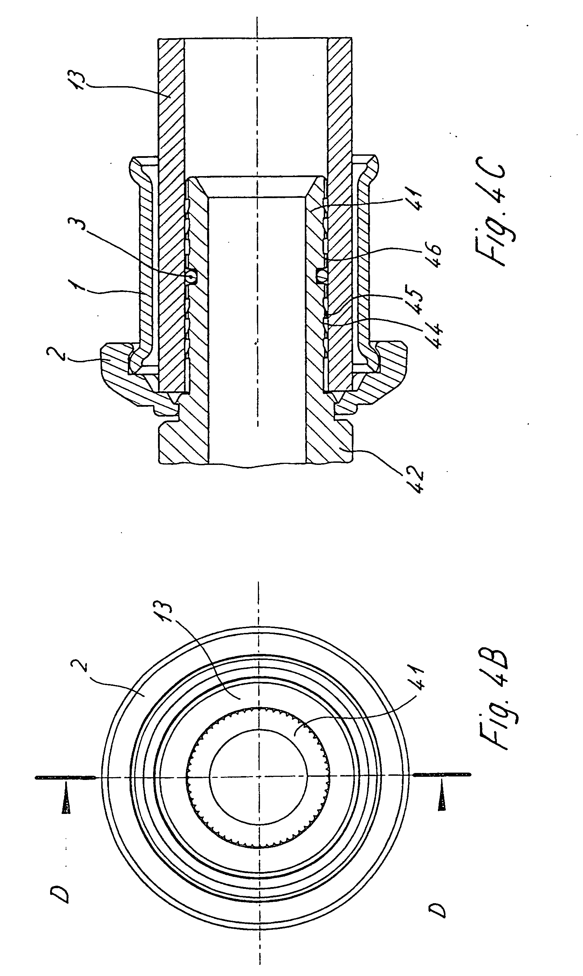

Bei dem in Fig. 4A bis 4D gezeigten Ausführungsbeispiel ist ein Stützrohr 40 in ein Rohr 13 einschiebbar und weist einen aus dem Rohr 13 herausragenden Abschnitt 42 und einen Stutzen 41 auf. An dem Stutzen 41 sind Rillen 44 und Rippen 45 vorgesehen. Die Rippen 45 besitzen an ihrem Umfang mehrere Einschnitte 46 nach Art einer Rändelung. Durch diese kleinen Einschnitte 46 an den Rippen 45 werden Strömungskanäle ausgebildet, so dass im unverpressten Zustand ein Fluid austreten könnte. Durch Verpressen der Presshülse 1 wird das Rohr 13 in diese Einschnitte 46 gedrückt, so dass eine abgedichtete Pressverbindung herstellbar ist.

In den dargestellten Ausführungsbeispielen ist jeweils nur eine Abflachung 16 bzw. 26 über den Umfang des Stutzens dargestellt. Es ist auch möglich, mehrere Abflachungen vorzusehen, so dass der Stutzen beispielsweise einen polygonalen Querschnitt hat.

Der Begriff "Ausnehmung" soll alle Formen von Einschnitten, Vertiefungen, Abflachungen, Kanälen oder dergleichen umfassen, die ein Strömen des Fluids entlang der Oberfläche des Stutzens ermöglichen, um eine gewollte Leckage vor Herstellung der Pressverbindung bereitzustellen. Die Form der Ausnehmung ist dabei in Abhängigkeit von dem jeweiligen Einsatzzweck frei wählbar.

## Patentansprüche

1. Pressverbindung mit einem Rohr (13) und einem Stützrohr mit einem im Querschnitt im wesentlichen zylindrischen Stutzen (11, 21, 31, 41), der in ein Rohr (13) einfügbar ist, und einem sich daran anschließenden, aus dem Rohr (13) herausragenden Abschnitt (12, 22, 32, 42) mit einem Anschlag, an dem die Stirnkante des Rohres (13) anliegt, wobei an dem Stutzen (11, 21, 31, 41) senkrecht zu dessen Achse ein oder mehrere Rippen (15, 25, 35, 45) ausgebildet sind, die sich beim Verpressen in das Material des Rohres (13) eingraben, **dadurch gekennzeichnet, dass** an den Rippen (15, 25, 35, 45) mindestens eine Ausnehmung (16, 26, 27, 36, 46) für die Ausbildung eines sich bis zu dem Anschlag erstreckenden Strömungskanals für eine gewollte Leckage im unverpressten Zustand zwischen Stutzen (11, 21, 31, 41) und Rohr (13) vorgesehen ist, die durch das Verpressen abdichtbar ist.

2. Pressverbindung nach Anspruch 1, **dadurch gekennzeichnet, dass** die Ausnehmung durch eine an den Rippen (15, 25) vorgesehene Abflachung (16, 26) gebildet ist.

3. Pressverbindung nach Anspruch 1 oder 2, **dadurch gekennzeichnet, dass** über den Umfang des Stutzens (11, 21, 31, 41) verteilt mehrere Abflachungen (16, 26) an den Rippen (15, 25) vorgesehen sind.

4. Pressverbindung nach einem der Ansprüche 1 bis 3, **dadurch gekennzeichnet, dass** die Ausnehmung durch mindestens einen Einschnitt (46) an den Rillen (45) gebildet ist, der als Strömungskanal einsetzbar ist.

5. Pressverbindung nach Anspruch 4, **dadurch gekennzeichnet, dass** über den Umfang des Stutzens verteilt mehrere eine Rändelung (46) bildende Einschnitte vorgesehen sind.

6. Pressverbindung nach einem der Ansprüche 1 bis 5, **dadurch gekennzeichnet, dass** an dem Stutzen (11, 21, 31, 41) eine ringförmige Vertiefung vorgesehen ist, in der ein Dichtring (3) eingelegt ist.

7. Pressverbindung nach Anspruch 6, **dadurch gekennzeichnet, dass** im Bereich der Vertiefung eine Ausnehmung (27, 36) vorgesehen ist, so dass zwischen Dichtring (3) und Stutzen (21, 31) ein verpressbarer Strömungskanal ausgebildet ist.

8. Pressverbindung nach Anspruch 6 oder 7, **dadurch gekennzeichnet, dass** an dem Stutzen (11, 21, 31, 41) ein oder mehrere Vertiefungen und Dichtringe (3) vorgesehen sind.

9. Pressverbindung nach einem der Ansprüche 1 bis 8, **dadurch gekennzeichnet, dass** um das Rohr (13) im Bereich des Stutzens (11, 21, 31, 41) eine Presshülse (1) vorgesehen ist.

10. Stützrohr für eine Pressverbindung mit einem im Querschnitt im wesentlichen zylindrischen Stutzen (11, 21, 31, 41), der in ein Rohr (13) einfügbar ist, und einem sich daran anschließenden, aus dem Rohr (13) herausragenden Abschnitt (12, 22, 32, 42) mit einem sich senkrecht zur Rohrachse erstreckenden Anschlag, an dem die Stirnkante des Rohres (13) anliegen kann, wobei an dem Stutzen (11, 21, 31, 41) senkrecht zu dessen Achse ein oder mehrere Rippen (15, 25, 35, 45) ausgebildet sind, die sich beim Verpressen in das Material des Rohres (13) eingraben, wobei der Außendurchmesser des Anschlags größer ist als der Außendurchmesser der Rippen und wobei an den Rippen (15,25, 35,45) mindestens eine Ausnehmung (16,26,27,36,46) für die Ausbildung eines vorgesehen ist, **dadurch gekennzeichnet, daß** der gesamte zylindrische Bereich des Stützrohres, der zwischen dem Anschlag und der, dem Anschlag am nächsten gelegenen Rippe liegt, einen kleineren Anßendurchmesser hat als die Rippen, so daß im unverpressten Zustand ein sich bis zum Anschlag erstrecken der Strömungskanal gebildet werden kann.

11. Stützrohr nach Anspruch 10, **dadurch gekennzeichnet, dass** die Ausnehmung durch eine an den Rippen (15, 25) vorgesehene Abflachung (16, 26) gebildet ist.

12. Stützrohr nach Anspruch 10 oder 11, **dadurch gekennzeichnet, dass** über den Umfang des Stutzens (11, 21, 31, 41) verteilt mehrere Abflachungen (16, 26) an den Rippen (15, 25) vorgesehen sind.

13. Stützrohr nach einem der Ansprüche 10 bis 12, **dadurch gekennzeichnet, dass** die Ausnehmung durch mindestens einen Einschnitt (46) an den Rillen (45) gebildet ist, der als Strömungskanal einsetzbar ist.

14. Stützrohr nach Anspruch 13, **dadurch gekennzeichnet, dass** über den Umfang des Stutzens verteilt mehrere eine Rändelung (46) bildende Einschnitte vorgesehen sind.

15. Stützrohr nach einem der Ansprüche 10 bis 14, **dadurch gekennzeichnet, dass** an dem Stutzen (11, 21, 31, 41) eine ringförmige Vertiefung vorgesehen ist, in der ein Dichtring (3) eingelegt ist.

16. Stützrohr nach Anspruch 15, **dadurch gekennzeichnet, dass** im Bereich der Vertiefung eine Ausnehmung (27, 36) vorgesehen ist, so dass zwischen Dichtring (3) und Stutzen (21,31) ein verpressbarer Strömungskanal ausgebildet ist.

17. Stützrohr nach Anspruch 15 oder 16, **dadurch gekennzeichnet, dass** an dem Stutzen (11, 21, 31, 41) ein oder mehrere Vertiefungen und Dichtringe (3) vorgesehen sind.

## Claims

1. Crimped connection comprising a tube (13) and a supporting tube having a nozzle (11, 21, 31, 41) which is essentially cylindrical in cross section and can be inserted into a tube (13) and having an adjoining section (12, 22, 32, 42) which projects from the tube (13) and has a stop against which the end edge of the tube (13) bears, one or more ribs (15, 25, 35, 45) being formed on the nozzle (11, 21, 31, 41) perpendicularly to its axis, these ribs (15, 25, 35, 45) digging into the material of the tube (13) during the crimping, **characterized in that** at least one aperture (16, 26, 27, 36, 46) for forming a flow passage, extending up to the stop, for a deliberate leakage in the uncrimped state between nozzle (11, 21, 31, 41) and tube (13) is provided on the ribs (15, 25, 35, 45) and can be sealed off by the crimping.

2. Crimped connection according to claim 1, **characterized in that** the aperture is formed by a flat (16, 26) provided on the ribs (15, 25).

3. Crimped connection according to Claim 1 or 2, **characterized in that** a plurality of flats (16, 26) distributed over the circumference of the nozzle (11, 21, 31, 41) are provided on the ribs (15, 25).

4. Crimped connection according to one of Claims 1 to 3, **characterized in that** the aperture is formed by at least one incision (46) on the grooves (45), and this incision (46) can be used as flow passage.

5. Crimped connection according to Claim 4, **characterized in that** a plurality of incisions forming knurling (46) are provided in a distributed manner over the circumference of the nozzle.

6. Crimped connection according to one of Claims 1 to 5, **characterized in that** an annular recess in which a sealing ring (3) is inserted is provided on the nozzle (11, 21, 31, 41).

7. Crimped connection according to Claim 6, **characterized in that** an aperture (27, 36) is provided in the region of the recess, so that a flow passage which can be crimped is formed between sealing ring (3) and nozzle (21, 31).

8. Crimped connection according to Claim 6 or 7, **characterized in that** one or more recesses and sealing rings (3) are provided on the nozzle (11, 21, 31, 41).

9. Crimped connection according to one of Claims 1 to 8, **characterized in that** a crimping sleeve (1) is provided around the tube (13) in the region of the nozzle (11, 21, 31, 41).

10. Supporting tube for a crimped connection having a nozzle (11, 21, 31, 41) which is essentially cylindrical in cross section and can be inserted into a tube (13) and having an adjoining section (12, 22, 32, 42) which projects from the tube (13) and has a stop which extends perpendicularly to the tube axis and against which the end edge of the tube (13) can bear, one or more ribs (15, 25, 35, 45) being formed on the nozzle (11, 21, 31, 41) perpendicularly to its axis, these ribs (15, 25, 35, 45) digging into the material of the tube (13) during the crimping, the outside diameter of the stop being greater than the outside diameter of the ribs, and at least one aperture (16, 26, 27, 36, 46) for forming a flow passage being provided on the ribs (15, 25, 35, 45), **characterized in that** the entire cylindrical region of the supporting tube which lies between the stop and the rib nearest to the stop has a smaller outside diameter than the ribs, so that a flow passage extending up to the stop can be formed in the uncrimped state.

11. Supporting tube according to Claim 10, **characterized in that** the aperture is formed by a flat (16, 26) provided on the ribs (15, 25).

12. Supporting tube according to Claim 10 or 11, **characterized in that** a plurality of flats (16, 26) distributed over the circumference of the nozzle (11, 21, 31, 41) are provided on the ribs (15, 25).

13. Supporting tube according to one of Claims 10 to 12, **characterized in that** the aperture is formed by at least one incision (46) on the grooves (45), and this incision (46) can be used as flow passage.

14. Supporting tube according to Claim 13, **characterized in that** a plurality of incisions forming knurling (46) are provided in a distributed manner over the circumference of the nozzle.

15. Supporting tube according to one of Claims 10 to 14, **characterized in that** an annular recess in which a sealing ring (3) is inserted is provided on the nozzle (11, 21, 31, 41).

16. Supporting tube according to Claim 15, **characterized in that** an aperture (27, 36) is provided in the region of the recess, so that a flow passage which can be crimped is formed between sealing ring (3) and nozzle (21, 31).

17. Supporting tube according to Claim 15 or 16, **characterized in that** one or more recesses and sealing rings (3) are provided on the nozzle (11, 21, 31, 41).

## Revendications

1. Assemblage par pressage avec un tube (13) et un tube de support muni d'un manchon (11, 21, 31, 41), sensiblement cylindrique en section et pouvant être inséré dans un tube (13), et d'un tronçon (12, 22, 32, 42) qui s'avance en saillie hors du tube (13) avec une butée contre laquelle la face frontale du tube (13) est en appui, une ou plusieurs nervures (15, 25, 35, 45) étant réalisées sur le manchon (11, 21, 31, 41) perpendiculairement à l'axe de celui-ci, lesquelles au moment du pressage s'enfoncent dans la matière du tube (13), **caractérisé en ce qu'**il est prévu sur les nervures (15, 25, 35, 45) au moins un évidement (16, 26, 27, 36, 46) destiné à former un canal d'écoulement, qui s'étend jusqu'à la butée en vue de laisser dans la position non pressée un passage entre le manchon (11, 21, 31, 41) et le tube (13) et qui peut être rendu étanche par le pressage.

2. Assemblage par pressage selon la revendication 1, **caractérisé en ce que** l'évidement est formé par un aplatissement (16, 26) prévu sur les nervures (15, 25).

3. Assemblage par pressage selon la revendication 1 ou 2, **caractérisé en ce qu'**il est prévu sur les nervures (15, 25) plusieurs aplatissements (16, 26), qui sont répartis sur la surface périphérique du manchon (11, 21, 31, 41).

4. Assemblage par pressage selon l'une quelconque des revendications 1 à 3, **caractérisé en ce que** l'évidement est formé sur les nervures (45) par au moins une encoche (46) qui peut être utilisée comme canal d'écoulement.

5. Assemblage par pressage selon la revendication 4, **caractérisé en ce qu'**il est prévu plusieurs encoches réparties sur la surface périphérique du manchon en formant un moletage (46).

6. Assemblage par pressage selon l'une quelconque des revendications 1 à 5, **caractérisé en ce qu'**il est prévu sur le manchon (11, 21, 31, 41) un creux annulaire dans lequel est posée une bague d'étanchéité (3).

7. Assemblage par pressage selon la revendication 6, **caractérisé en ce qu'**il est prévu un évidement (27, 36) dans la zone du creux, de telle sorte qu'il se forme entre la bague d'étanchéité (3) et le manchon (21, 31) un canal d'écoulement pouvant être comprimé.

8. Assemblage par pressage selon la revendication 6 ou 7, **caractérisé en ce qu'**un ou plusieurs creux et bagues d'étanchéité (3) sont prévus sur le manchon (11, 21, 31, 41).

9. Assemblage par pressage selon l'une quelconque des revendications 1 à 8, **caractérisé en ce qu'**une gaine de serrage (1) est prévue autour du tube (13) dans la zone du manchon (11, 21, 31, 41).

10. Tube de support pour un assemblage par pressage, comportant un manchon (11, 21, 31, 41), sensiblement cylindrique en section et pouvant être inséré dans un tube (13), et, en prolongement dudit manchon, un tronçon (12, 22, 32, 42) qui s'avance en saillie hors du tube (13) avec une butée, qui est perpendiculaire à l'axe du tube et contre laquelle la face frontale du tube (13) peut venir en appui, une ou plusieurs nervures (15, 25, 35, 45) étant réalisées sur le manchon (11, 21, 31, 41) perpendiculairement à l'axe de celui-ci, lesquelles au moment du pressage s'enfoncent dans la matière du tube (13), le diamètre extérieur de la butée étant plus grand que le diamètre extérieur des nervures et au moins un évidement (16, 26, 27, 36, 46) étant prévu sur les nervures (15, 25, 35, 45) pour la réalisation d'un canal d'écoulement, **caractérisé en ce que** la totalité de la zone cylindrique du tube de support, qui se situe entre la butée et la nervure la plus proche de la butée, a un diamètre extérieur plus petit que celui des nervures, de telle sorte que, dans la position non pressée il se forme un canal d'écoulement qui s'étend jusqu'à la butée.

11. Tube de support selon la revendication 10, **caractérisé en ce que** l'évidement est formé par un aplatissement (16, 26) prévu sur les nervures (15, 25).

12. Tube de support selon la revendication 10 ou 11, **caractérisé en ce qu'**il est prévu sur les nervures (15, 25) plusieurs aplatissements (16, 26), qui sont répartis sur la surface périphérique du manchon (11, 21, 31, 41).

13. Tube de support selon l'une quelconque des revendications 10 à 12, **caractérisé en ce que** l'évidement est formé sur les nervures (45) par au moins une encoche (46) qui peut être utilisée comme canal d'écoulement.

14. Tube de support selon la revendication 13, **caractérisé en ce qu'**il est prévu plusieurs encoches réparties sur la surface périphérique du manchon en formant un moletage (46).

15. Tube de support selon l'une quelconque des revendications 10 à 14, **caractérisé en ce qu'**il est prévu sur le manchon (11, 21, 31, 41) un creux annulaire dans lequel est posée une bague d'étanchéité (3).

16. Tube de support selon la revendication 15, **caractérisé en ce qu'**il est prévu un évidement (27, 36) dans la zone du creux, de telle sorte qu'il se forme entre la bague d'étanchéité (3) et le manchon (21, 31) un canal d'écoulement pouvant être comprimé.

17. Tube de support selon la revendication 15 ou 16, **caractérisé en ce qu'**un ou plusieurs creux et bagues d'étanchéité (3) sont prévus sur le manchon (11, 21, 31, 41).
